(19) Europäisches Patentamt
European Patent Office
Office européen des brevets

(11) EP 3 588 014 B1

(12) **EUROPEAN PATENT SPECIFICATION**

(45) Date of publication and mention
of the grant of the patent:
**14.04.2021 Bulletin 2021/15**

(51) Int Cl.:
**G01D 5/244** (2006.01) **G01B 7/00** (2006.01)

(21) Application number: **18180271.1**

(22) Date of filing: **28.06.2018**

(54) **TRANSPORT SYSTEM AND METHOD FOR DETECTING A POSITION OF A CARRIER IN A TRANSPORT SYSTEM**

TRANSPORTSYSTEM UND VERFAHREN ZUR DETEKTION EINER POSITION EINES TRÄGERS IN EINEM TRANSPORTSYSTEM

SYSTÈME DE TRANSPORT ET PROCÉDÉ DE DETECTION D'UNE POSITION D'UN TRANSPORTEUR DANS UN SYSTÈME DE TRANSPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2020 Bulletin 2020/01**

(73) Proprietor: **Robert Bosch GmbH**
**70442 Stuttgart (DE)**

(72) Inventor: **PANCRAS, Wilco**
**5664AE Geldrop (NL)**

(56) References cited:
**EP-A1- 2 182 627      EP-A1- 2 314 989**
**US-A1- 2002 105 445      US-A1- 2014 285 184**

**Description**

The present invention relates to a transport system and a method for detecting a position of a carrier in a transport system. In particular, the present invention relates to a transport system and a method for detecting a position of a carrier in a transport system which moves and/or positions a carrier by interaction between magnetic units and controllable coil units and is usable for example in the processing of semiconductor wafers.

Carriers which are individually movable in a transport system are usable to transport products along a processing line in which the products can be treated by various processes. One example in this regard is the field of producing semiconductor devices. For producing semiconductor chips with integrated circuits, semiconductor wafers are positioned on a carrier so that they can be treated by predetermined processes, like etching or irradiation with laser radiation. In the course of treating the wafer to produce the desired electric circuit element or electric circuitry on the wafer, it is required that the wafer is positioned at a predefined position. Whether or not the wafer is positioned at the right predefined position is usually determined by a sensor. Since the element(s) to be produced on the wafer has/have dimensions in the area of micrometers or less, for example, the position sensor has to provide a high precision signal.

For positioning the wafer at the predefined position during the production process, a linear motor can be used in the transport system, as described in EP 2 182 627 A1, for example. The linear motor moves the carrier with the wafer thereon along a track which may have at least one linear section and additionally or alternatively at least one curved section. The movement of the carriers is achieved by magnetic effect produced by the interaction of magnetic units and controllable coil units.

To detect the position of the carriers along the track, position sensors are positioned adjacent to the coils. Currently, the position sensors are usually Hall sensors which vary their output voltage in response to a magnetic field and detect thus the magnetic field strength. The gap between the Hall sensors and the controllable coils of the linear motor influences the quality of the detection signal generated by the Hall sensors. Ideally, the sensor will output a sinusoidal signal when the carriers move along. If the gap is too small, the signal will be distorted, showing higher odd harmonics. If the gap is too big, the sensor signal will be smaller giving a worse signal to noise ratio (SNR). Finding an optimal gap is far from trivial and requires time-consuming iterative procedures. Even if a sensor placement can be optimized with respect to higher harmonics by varying the air gap between the controllable coils and the Hall sensors until a radius plot of the squares of both a sine-measurement and a cosine-measurement is smooth, this is a tedious task, especially with large scale systems, in which more than 1000 sensors are used, for example. In addition, careful positioning is not always possible, especially in applications with limited space requirements or larger variations in air gap due to a large variety of carriers.

Replacing the Hall sensors with magneto-resistive sensors, which are also named MR-sensors and measure the direction of the magnetic field, cannot solve the above-mentioned problems related to the higher harmonics. In this case, the positioning of a sensor can only be optimized by comparing its position signal to an additional, separate sensor system during commissioning to visualize harmonic positioning errors in the MR-sensor readout. This makes accurate placement of the sensor in most applications impossible.

Alternatively, an additional, more accurate sensor system can be used to create calibration tables. This is usually done in a calibration station that is separated from the machine. This solution assumes that the air gap of the sensor in the calibration station is equal to the air gap for all the sensors in the machine. In addition, the calibration station cannot discern harmonic sensor inaccuracies from other inaccuracies which may be present in the magnet plate, for example. Therefore, a separate calibration table is required for each magnet plate. As a result, also such a sensor system is a tedious and expensive solution.

US 2014/0285184 A1 discloses an apparatus for measuring displacement.

EP 2314 989 A1 discloses an encoder pattern with matching aperture pattern, a method for designing said encoder pattern, and an optical shaft encoder in which the encoder pattern and aperture pattern are implemented.

US 2002/0105445 A1 discloses a magnetic encoder including a magnetic drum, having on the outer peripheral surface thereof magnetized portions spaced at equal pitches, and a magnetic sensor unit opposed to the outer peripheral surface of the magnetic drum. Further, a method for reducing harmonic distortion thereof is disclosed.

Therefore, it is an object of the present invention to provide a sensor device and a method for detecting a position of a carrier in a transport system which can solve the above mentioned problems. In particular, it is an object of the present invention to provide a sensor device and a method for detecting a position of a carrier in a transport system which can simplify and enhance the calibration of a sensor device used for detecting the position of an object by the use of a magnetic field in a transport system.

This object is solved by a transport system having at least one sensor device for detecting the position of a carrier in the transport system according to the features of claim 1.

The above described sensor device of the transport system is constructed such that the sensor device is more tolerant in respect of an air gap variation. Due to this, even a somewhat inaccurate placement of the sensor device in a transport system delivers sensor signals with high quality in which also the higher harmonics are cancelled. As a result, the placement of the sensor device in a transport system is much easier and less cost intensive than before. Assembling a track of a linear motion system (LMS track) can be done faster and cheaper while maintaining accuracy.

Possibly, the described sensor device of the transport system increases the accuracy due to the averaging of multiple sensor element readouts.

The principle used by the described sensor device of the transport system is beneficial for Hall sensors as well as MR-sensors. Optionally, the principle may also be used for optical sensors or other measurement principles based on sine-cosine signals.

Further advantageous developments of the of the transport system and the sensor device are set out in the dependent claims.

In an advantageous configuration, the at least two sensor elements and the at least two extra sensor elements are positioned in a plane which is spaced by an air gap from said at least one carrier. Therewith, the position is detectable in non-contact. As a result, the position detection does not contribute to wear of the sensor device or the carriers.

The magnetic sensor elements may be positioned on a line which is parallel with the direction of motion and which is spaced by an air gap from the at least one carrier.

Possibly, two sensor elements are used for measuring the position of said carrier, wherein at least one of said at least two extra sensor elements is positioned between the two sensor elements.

It is possible that the at least two sensor elements are magnetic sensor elements or optical sensor elements or capacitive sensor elements. Herein, the magnetic sensor elements are Hall elements or magneto-resistive sensor elements.

It is either possible that the adjusting element adjusts the detection signals in the analogue domain or in the digital domain.

In one embodiment, the adjusting element adjusts the detection signals by subtracting or otherwise processing the detection signals of the at least two sensor elements and the at least two extra sensor elements.

The transport system further comprises at least one carrier and at least two controllable driving devices. Herein, the at least one magnetic element of the at least one carrier cooperates with the at least two controllable driving devices so that the at least one carrier is moveable relative to the at least two controllable driving devices by magnetic force, and wherein the at least one sensor device is positioned to detect the position of the at least one carrier at one of the at least two controllable driving devices.

In the described transport system, the two controllable driving devices may build a track which comprises at least one linear section and/or at least one curved section.

The described transport system may be part of a machine for treating and/or producing an article, wherein the article is a semiconductor wafer or a display panel or any other (electronic) assembly.

The above mentioned object is further solved by a method for detecting a position of a carrier in a transport system according to the features of claim 12.

The above described method is performed by the use of the above described sensor device in the transport system. Therefore, the method achieves the same advantages as they are mentioned above in respect of the device and the system.

Further possible implementations of the invention comprise also combinations of features or styles described above or in the following with reference to the embodiments, even if they are not explicitly mentioned. Herein, the person skilled in the art will also add single aspects as improvements or additions to the respective basic form of the invention.

Further implementations of the invention are subject matter of the embodiments of the invention described in the following.

In the following, the invention is described in more detail by means of embodiments and with reference to the appended drawing figures, wherein:

Fig. 1 schematically shows a side view of a part of a machine with a transport system having a sensor device according to an embodiment;

Fig. 2 schematically shows a configuration of a sensor device according to the embodiment;

Fig. 3 shows signals outputted by a first sensor element of the sensor device according to a first example of the embodiment;

Fig. 4 shows signals outputted by a first sensor element of the sensor device according to a second example of the embodiment;

Fig. 5 shows a Lissajous figure resulting from the signals shown in Fig. 7;

Fig. 6 shows a Lissajous figure resulting from the signals outputted by the sensor device according to the embodiment; and

Fig. 7 shows signals output by first and second sensor elements of the sensor device according to a third example of the embodiment.

In the drawing figures, the same or functionally same elements are provided with the same reference signs unless given otherwise.

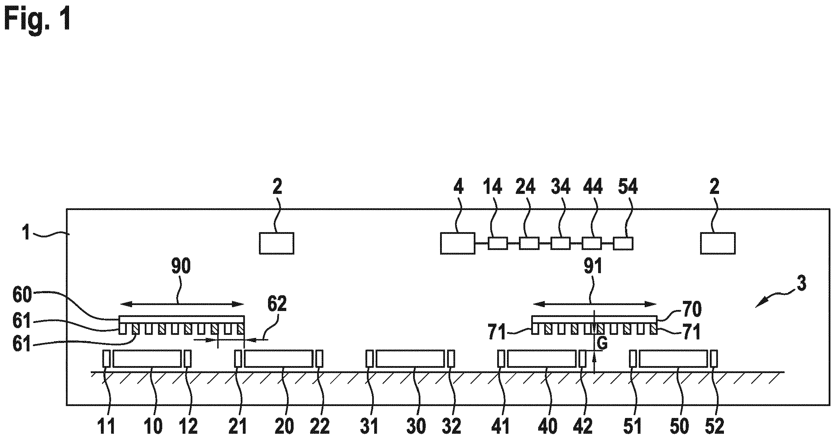

Fig. 1 shows in a simplified and schematic view a part of a machine 1 for treating and/or producing an article 2. The article 2 can be an electronic apparatus, for example. In particular, the article 2 is a semiconductor wafer or a display panel. However, the article 2 is not limited thereto and can be any other article.

The machine 1 comprises a transport system 3 having a transport system control device 4, a detection device 5, a first driving device 10, a second driving device 20, a third driving device 30, a fourth driving device 40, a fifth driving device 50, a first carrier 60 and a second carrier 70. In Fig. 1, the first to fifth driving devices 10, 20, 30, 40, 50 build up a track of the transport system 3. The first and second carriers 60, 70 may be moved back and forth or translational on the track in the transport system 3, as shown by the arrows 90, 91 in Fig. 1.

A movement of the carriers 60, 70 over the first to fifth driving devices 10, 20, 30, 40, 50 and the position of the carriers 60, 70 is detected by sensor devices 11, 12, 21, 22, 31, 32, 41, 42, 51, 52. The carriers 60, 70 are spaced to the first to fifth driving devices 10, 20, 30, 40, 50 and/or the sensor devices 11, 12, 21, 22, 31, 32, 41, 42, 51, 52 by at least an air gap G.

The sensor devices 11, 12 are each positioned at one side of the first driving device 10.

The sensor devices 21, 22 are each positioned at one side of the second driving device 20.

The sensor devices 31, 32 are each positioned at one side of the third driving device 30.

The sensor devices 41, 42 are each positioned at one side of the fourth driving device 40.

The sensor devices 51, 52 are each positioned at one side of the fifth driving device 50.

The sensor devices 11, 12, 21, 22, 31, 32, 41, 42, 51, 52 can each detect at which position a carrier of the carriers 60, 70 is present at the corresponding first to fifth driving devices 10, 20, 30, 40, 50. The time displacement of the signals of the sensor devices 11, 12, 21, 22, 31, 32, 41, 42, 51, 52 indicate, in which direction the respective carrier 60, 70 travels or moves over the first to fifth driving devices 10, 20, 30, 40, 50.

The carriers 60, 70 are movable in the transport system 3 of Fig. 1 by a control performed by the transport system control device 4 and first to fifth driving device control devices 14 to 54 of the transport system 3. Herein, the first driving device 10 is controlled by the first driving device control device 14. The second driving device 20 is controlled by the second driving device control device 24. The third driving device 30 is controlled by the third driving device control device 34. The fourth driving device 40 is controlled by the fourth driving device control device 44. And, the fifth driving device 50 is controlled by the fifth driving device control device 54.

As illustrated in the specific example of Fig. 1, the first carrier 60 comprises a plurality of magnetic elements 61 being positioned spaced to each other at a base plate. Similarly, the second carrier 70 comprises a plurality of magnetic elements 71, being positioned spaced to each other at a base plate of the second carrier 70. For the sake of clear depiction, not all of the magnetic elements 61, 71 are provided with a reference sign in Fig. 1. The magnetic elements 61, 71 are spaced to each other at the first and second carriers 60, 70 so that a magnet pole pitch 62 is present, as depicted in Fig. 1 at the first carrier 60. A similar magnet pole pitch is present at the second carrier 70, as well. The magnet pole pitch 62 is equal to the distance from one North-pole to the next North-pole. The magnet pole pitch 62 is typically selected as 24 mm. However, the magnet pole pitch 62 is not limited thereto but may be selected suitable for the technical application.

The magnetic elements 61, 71 cooperate with the first to fifth driving devices 10, 20, 30, 40, 50 so that the carriers 60, 70 are moveable over the first to fifth driving devices 10, 20, 30, 40, 50 by magnetic force and the control performed by the control devices 4, 14, 24, 34, 44, 54. For this purpose, the magnetic elements 61, 71 of the first and second carriers 60, 70 are faced to the first to fifth driving devices 10, 20, 30, 40, 50 so that the magnetic elements 61, 71 can cooperate with the first to fifth driving devices 10, 20, 30, 40, 50 to transport the carriers 60, 70. Thus, the carriers 60, 70 are moveable over the track of the transport system 3 from a first position to a second position different from the first position. For example, the first position is the position on the left side of the transport system 3 in Fig. 1, where the first driving device 10 is positioned in Fig. 1. The second position could then be the position of the fourth or fifth driving device 40, 50, which are positioned on the right side in Fig. 1.

The movement of the carriers 60, 70 over the track can be tracked by evaluating the detection signals of the sensor devices 11, 12, 21, 22, 31, 32, 41, 42, 51, 52.

A coarse position p of the carriers 60, 70 relates to a position of the carriers 60, 70 given in a dimension which corresponds to the dimension of more than one pole pitch 62. A fine position fp of the carriers 60, 70 relates to a position of the carriers 60, 70 given in a dimension of one pole pitch 62. To determine a position of the carriers 60, 70 in the dimension corresponding to the dimension of one pole pitch 62, i.e. a fine position fp, the vertical component of the field of the magnet plate of the corresponding carriers 60, 70 is presumed sinusoidal. This assumption is used explicitly in the use of a tan$^{-1}$ function to determine an angle 0, as described in more detail below, and is seen to be valid - up to a certain level of accuracy - at a carefully selected distance from the magnets of the carriers 60, 70. At this distance, called the air gap G, sensor elements 111, 112, 121, 122 of the sensor devices 11, 12 should be placed. The same is valid for the sensor devices 21, 22, 31, 32, 41, 42, 51, 52 so that the principle is only explained in detail by reference to the sensor devices 11, 12.

As a rule of thumb, the air gap G should be approximately at a quarter of the pole pitch. If a 24mm magnet plate is used, the air gap G should be approximately 6mm. However it is possible to alternatively choose different values for the air gap G, in order to balance between signal distortion and signal to noise ratio (SNR).

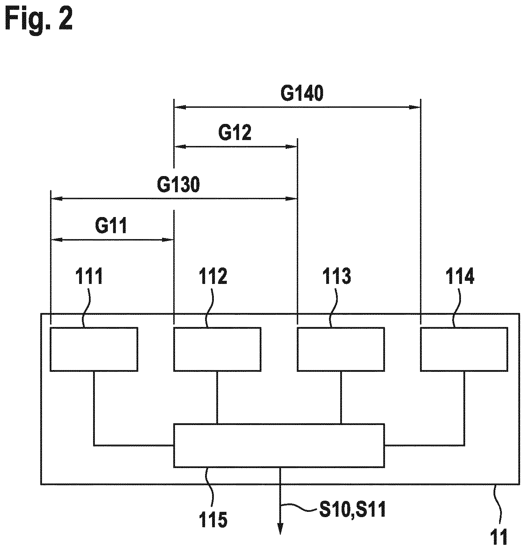

Fig. 2 schematically shows a specific example for the configuration of the sensor device 11. One or more of the sensor devices 12, 21, 22, 31, 32, 41, 42, 51, 52, 12, 21, 22, 31, 32, 41, 42, 51, 52 may be configured like the sensor device 11.

The sensor device 11 has a first sensor element 111, a second sensor element 112, a third sensor element 113, a fourth sensor element 114, and an adjusting element 115. The sensor device 11 is a device in which the sensor elements 111 to 114 each deliver a sinusoidal signal in detecting the position of the carriers 60, 70 at the first driving device 10. The period of the sinusoidal signal corresponds to one pole pitch 62. Herein, the sensor elements 111, 112 build a SinCos-sensor to which the extra sensor elements 113, 114 are added as it is explained in more detail in the following.

For detecting the position of the carriers 60, 70 at the first driving device 10, the sensor element 111 produces a sine signal and the sensor element 112 is positioned to produce a cosine-signal. This is achieved by positioning the sensor element 112 spaced apart from the sensor element 111 by an offset G11 in the direction of transitional movement of one carrier 60, 70 over the driving device 10, as shown in Fig. 2. The offset G11 is defined as the distance between the ends of the two sensor elements 111, 112, which a carrier 60, 70 reaches at first when the carrier 60, 70 moves to the sensor element 111 and then to the sensor element 112. These ends of the sensor elements 111, 112 may also be named as heads of the sensor elements 111, 112. The offset G12 between the sensor elements 112, 113 is defined in the same way.

The sensor elements 111 to 114 monitor the magnetic field from magnetic elements 61 or 71 of the carriers 60, 70. Since the sensor elements 111, 112 are displaced by the offset G11 from each other, there is a phase difference between the output of the two sensor elements 111, 112.

In the above-example, in which the magnet pole pitch 62 is selected as 24 mm, the sensor elements 111, 112 are displaced by an offset G11 of 24/4 = 6 mm apart, since this corresponds to a quarter of a period of the sinewave. In general, it is said that the sensor element 111 produces a sinewave, while the sensor element 112 produces a cosine wave, since $\sin(\phi + 90°) = \cos(\phi)$.

For detecting the course position p of a carrier 60, 70 in the transport system 3, the sensor device 11 counts how many *magnetic periods or magnet pole pitches* 62 have passed since the carrier 60, 70 was first detected by the sensor device 11.

To obtain fine positioning fp, the angle $\phi$ is converted to units of the detected position, for example into mm, using the magnetic period or magnet pole pitch 62, for example 24 mm, as mentioned in equation (1).

$$fp = \phi E / 360° * \text{magnetic period} \qquad \ldots (1)$$

The estimated angle $\phi E$ is estimated using the trigonometric relations

$$\tan(\phi) = \sin(\phi) / \cos(\phi)$$
$$\phi E = \tan^{-1}(U_{sin} / U_{cos}) \qquad \ldots (2)$$

In the present embodiment, the sensor device 11 comprises magnetic elements as the sensor elements 111 to 114 to measure the position of a carrier 60, 70 by looking at the vertical field of a magnet plate of this carrier 60, 70. The magnetic elements 111 to 114 may be Hall sensor elements and/or magneto-resistive sensor elements (M R-sensor elements). Alternatively, the sensor elements 111, to 1142 may be optical sensors. Alternatively, the sensor elements 111, to 114 may be capacitive sensor elements. Alternatively, the sensor elements 111, to 114 may be pressure sensor elements.

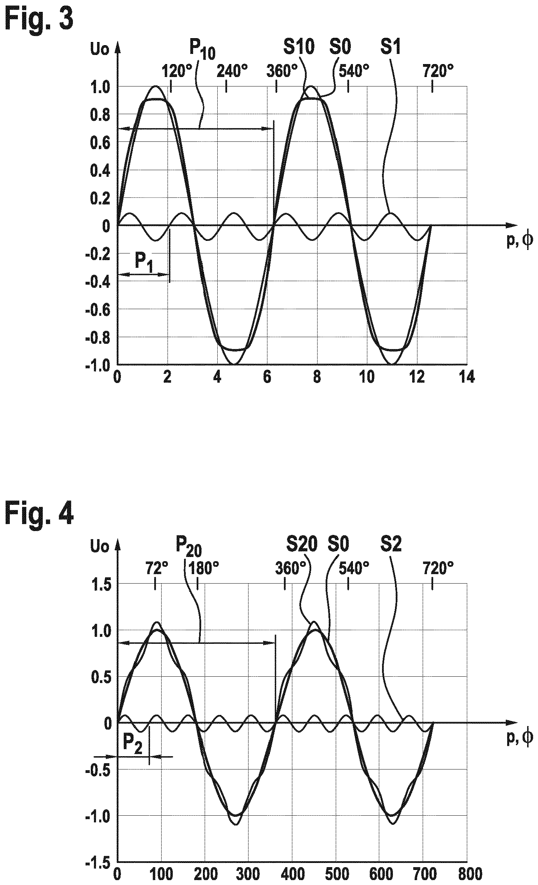

The sensor elements 111, to 114 are positioned adjacent to each other in the same direction as the direction of the movement of the carriers 60, 70 and which is approximately perpendicular to the direction of the air gap G. Thus, the sensor elements 111, to 114 are positioned in a plane and on a line, wherein the plane and/or the line are/is in parallel with the direction of the movement of the carriers 60, 70 and are/is spaced by the air gap G from the carriers 60, 70. In compliance with these conditions, the offset G130 with which the sensor elements 111 and 113 are positioned relative to each other is determined as described in the following with reference to Fig. 3 and Fig. 4.

As an example, the first sensor element 111 outputs a detection signal S10 of Fig. 3 over the carrier position p which corresponds to the angle $\phi$, as mentioned above. The detection signal S10 has an output voltage Uo and a period $P_{10}$ and thus a spatial frequency $f_{10} = 1/P_{10}$ as illustrated in Fig. 3. The detection signal S10 is built up by a base tone S0 and a third harmonic S1. As derivable from Fig. 3, the detection signal S10 is a somewhat stomped version of the sine-wave of the base tone S0. This shows that the first sensor element 111 is positioned at a distance which is too close to detect the magnetic field correctly, i.e. the detection signal S10 is no longer well-described by a sinus. In other words, the air gap G is too small.

As observable from Fig. 3, the third harmonic S1 repeats itself after 120° (one third) of the period P10 of the base tone S0 while the base tone S0 repeats itself (by definition) after the period P10. In other words, the period P1 of the third harmonic S1 and the period P10 of the base tone S0 are different.

Therefore, to remove harmonics from the detection signal S10 in order to achieve higher accuracy in the determination of the position, extra sensor elements are added to the sensor elements 111, 112. In the example of Fig. 2, two extra sensors are added, namely, the sensor elements 113, 114. The sensor element 113 is positioned to be spaced apart from the first sensor element 111 by a distance G130 which is equivalent to $\phi = 120°$ and where the second sensor element 113 detects signals from the same source, for example a carrier 60 as shown in Fig. 1. Similarly an extra sensor element 114 is added at a distance G140. Thus, the sensor element 111 is positioned at the position 0°, the sensor element 112 is positioned at 90°, the extra sensor element 113 is positioned at 120° and the extra sensor element 114 is positioned at 210°. As a result, the third harmonic S1 of the sensor element 113 is in phase with the third harmonic S1 of the first sensor element 111 and the base tones S0 of both sensor elements 111, 113 are not.

Therefore, the adjusting element 115 is configured to subtract the two signals of the first and third sensor elements 111, 113. This cancels the third harmonic S1 completely and provides a pure base tone S0'. This pure base tone S0' will have a modified amplitude, which can mathematically be proven to have an amplitude by a factor of $\sqrt{3}$ larger, and a phase shift of 30° with respect to the signal S0 of the first sensor element 111 as it is shown in Fig. 3. Similarly, the adjusting element 115 is configured to subtract the two signals of the second and fourth sensor elements 112, 114.

It is possible that the adjusting element 115 subtracts the two analogous signals of the first and third sensor elements 111, 113 and the two analogous signals of the two signals of the second and fourth sensor elements 112, 114. That is, the combination of the signals of the first and third sensor elements 111, 113 and the second and fourth sensor elements 112, 114 can be done in the analogue domain. A benefit of combining the signals in the analogue domain is that the output of the sensor device 11 which consists of multiple measurement devices is still one analogous Sine signal. So it has the same signal interface as a conventional measurement device.

Alternatively the adjusting element 115 combines the signals of the first and third sensor elements 111, 113 in the digital domain. Similarly, the adjusting element 115 combines the signals of the second and fourth sensor elements 112, 114 in the digital domain. Such a course of action has the benefit of correcting for gain variations in the different sensor elements 111 to 114.

Due to the periodicity of the harmonic signals, there are multiple combinations that will yield a pure base tone S0'. To eliminate a higher harmonic from a signal of the sensor 11, it is either required that

A1) in case the both signals S10 of the elements 111, 113 are subtracted, the sensor element 113 produces a signal S10 where the harmonic S1 is in phase with the harmonic S1 of the signal S10 produced by the first sensor element 111, which applies to the signals S10 produced by the sensor elements 112, 114, as well, and
B1) the base tone S0 of the signals S10 produced by the sensor elements 111, 113 is not in phase which applies to the signals S10 produced by the sensor elements 112, 114, as well.
A2) in case the both signals S10 of the elements 111, 113 are added, the sensor element 113 produces a signal S10 where the harmonic S1 is in counter phase with the harmonic S1 of the signal S10 produced by the first sensor element 111, which applies to the signals S10 produced by the sensor elements 112, 114, as well, and
B2) the base tone S0 of the signals S10 produced by the sensor elements 111, 113 is not in counter phase which applies to the signals S10 produced by the sensor elements 112, 114, as well.

Both ways mentioned above have the result that higher harmonics S1 and so on are cancelled while the base-tone S0 is not cancelled.

Fig. 3 shows that the extra sensor element 113 can be placed spaced to the sensor element 111 at an offset G130 which is equivalent to an angle $\phi$ of 120° (corresponding to 1/3 P10) to fit the requirement that the signal S1 is in phase (the value of the third harmonic S1 of a second sensor element 112 placed at 1/3 P10 away from the first sensor element 111 is equal to the value of the third harmonic S1 of the first sensor element) and the signal S0 is not in phase (the value of the first harmonic of the sensor element 113 placed at 1/3 P10 away from the first sensor element 111 is not equal to the value of the first harmonic of the first sensor element 111). The same applies to the signals S10 produced by the sensor elements 112, 114.

From Fig. 3, it can be similarly observed that it is also possible to place such an extra sensor element 113 at an offset G130 which is equivalent to an angle $\phi = 240° = 2 * 120°$, as this location will also fit the above-mentioned requirement. The same applies to the extra sensor element 114 as regards the sensor element 112 and thus the offset 140.

At an offset G130 which is equivalent to an angle $\phi = 360°$ (3 * 120°), it is not advantageous to place an extra sensor element 113, as this does not fit the requirement B1) or B2). The same applies to the extra sensor element 114 as regards the sensor element 112.

In general, it is possible to place an extra sensor element 113 spaced apart from the first sensor element 111 by an offset G130- which is equivalent to any angular distance of k * 120°, if k is 1, 2, 4, 5, 7, 8, 10 ...and for all k which cannot be divided by 3. Each of these offsets G130 corresponds to k/3 * P10. The same applies to the sensor element 114 as regards the sensor element 112. The thus obtained signals are of the form:

$$\sin(\phi) - \sin(\phi + k \times 120°), \text{ for } k = 1, 2, 4, 5, \ldots \qquad \ldots (3)$$

which all have an amplitude $\sqrt{3}$ larger than the original and the phase shift depends on the actual value of k, as can easily be derived from mathematical analysis.

The value for k should be chosen as small as possible, whilst the sensor 11 can still be manufactured. Herein, a too small value for k in combination with a small value for P10 could lead thereto that it is impossible to produce the sensor device 11, because the sensors 111 and 112 are too close to each other. The same applies to the sensor element 114 as regards the sensor element 112.

It is also possible to cancel higher harmonics by adding signals instead of subtracting. The signals are then of the form:

$$\sin(\phi) + \sin(\phi + k \times 120° - 180°), \text{ for } k = 1, 2, 4, 5, \ldots \qquad \ldots (4)$$

The relations (3) and (4) give all options for creating additive sensors 11 Obviously, the combinations for k=0 or k=3 in the above equations will not yield a clean tone, since the base tone S0 will be cancelled as well. Thus, the equations (3) and (4) will yield no tone.

In general, all combinations for which the higher harmonic is cancelled, and the base tone S0 is not cancelled can be used to clean up the distorted signal.

It is also possible to cancel harmonics higher than the third harmonic S1. The adjusting element 115 would have to be adapted accordingly.

In the example of Fig. 4, the first sensor element 111 outputs a detection signal S20 having a period $P_{20}$ and thus a frequency $f_{20} = 1/P_{20}$ as illustrated in Fig. 3. The detection signal S10 is built up by a base tone S0 and a fifth harmonic S2. The detection signal S20 as the resulting signal is a harmonic signal with the frequency $f_{20}$. In this example, the detection signal S20 is a somewhat pointy version of the sine-wave of the base tone S0.

As derivable from the above, the detection signal S20 can be cleaned up, if the extra sensor element 113 is positioned at a gap 130 corresponding to $P_{20}/5$ (corresponding to 72°) apart from the first sensor element 111 so that the signal of the sensor element 113 is subtracted from the signal S20 by the adjusting element 115. The same applies to the sensor element 114 as regards the sensor element 112.

Thus, in the example of Fig. 4, the sensor element 111 would be positioned at 0°, the sensor element 112 would be positioned at 90°, the sensor element 113 would be positioned at 72° and the sensor element 114 would be positioned at 162°. One notes that the sensor elements 112 and 113 have thus switched position compared to the example of Fig. 3 mentioned above. That is, the extra sensor element 113 is to be positioned between the first and second sensor elements 111, 112.

In general, a periodic sensor element signal distorted with an n-th harmonic S1, S2, ... can be cleaned by placing an additional sensor element at an offset 130 corresponding to k/n*360° for all k for which k/n does not yield an integer value, and subtracting the two signals.

Alternatively, an n-th harmonic S1, S2, ...Sn can be cancelled by placing an extra sensor element at an angular distance of -180°+k/n*360° for all k for which k/n does not yield an integer value. Subtracted signals are then of the form:

$$\sin(\phi) - \sin (\phi + k/n \times 360°), \text{ for } k/n \neq N \qquad \qquad ...(6)$$

And additive signals are of the form:

$$\sin(\phi) + \sin (\phi + k/n \times 360° - 180°), \text{ for } k/n \neq N \qquad \qquad ...(7)$$

where k is any integer value, n is the harmonic to be suppressed and N is a natural number or integer value. The amplitude of the respective detection signal S10, S20, ... will be modified by a factor $2\sin(k/2n \times 360°)$.

The phase shift of the base tone S0 due to the additional sensor will be $k/2n \times 360° - 90°$.

Also here it is possible that the adjusting element 115 subtracts the analogous signals of the sensor elements 111, 113 and the analogous signals of the second and fourth sensor elements 112, 114. That is, the combining of the signals of the sensor elements 111, 113 can be done in the analogue domain with the same benefit as mentioned in respect of Fig. 3.

Alternatively the adjusting element 115 combines the signals of the sensor elements 111, 113 and the signals of the sensor elements 112, 114 in the digital domain with the same benefit as mentioned before in respect of the third harmonic shown in Fig. 3.

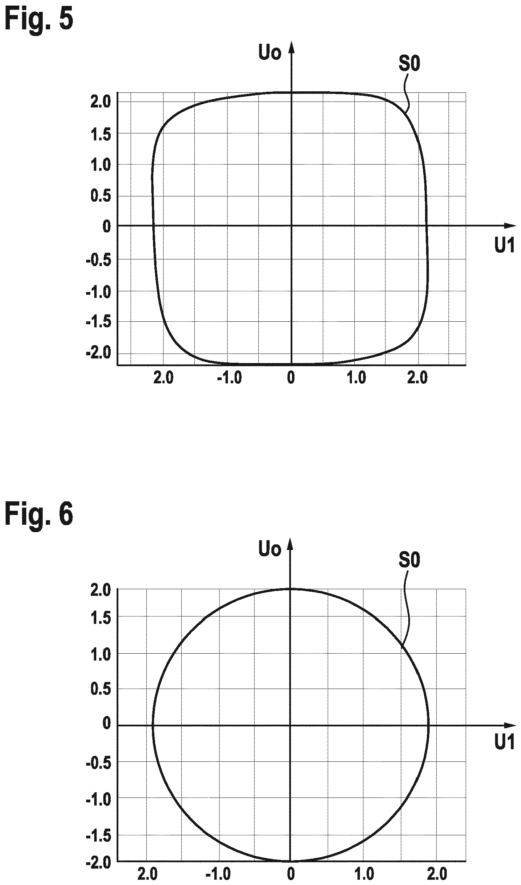

Consequently, the sensor device 11 of the embodiment generates a sine-wave voltage Usin and a cosine-wave voltage Ucos, both as a function of the carrier position p, due to the specific placement of the sensor elements 111 to 114 in the sensor device 11. In case the measured voltages Usin, Ucos are not perfectly sinusoidal, since the measured voltages Usin, Ucos are distorted by harmonic components, a graph shown in Fig. 5 is the result. In Fig. 5, the measured voltage Ucos is shown on the horizontal axis and the measured voltage Usin is shown on the vertical axis. The form of the graph of Fig. 5 is a result of an imperfect air gap G shown in Fig. 1.

Fig. 6 shows the graph which results due to the specific placement of the sensor elements 111 to 114, which is made as described above to avoid that the measured voltages Usin, Ucos are not perfectly sinusoidal, since the measured voltages Usin, Ucos are distorted by harmonic components.

According to a modification of the above-described principle of achieving a clean measurement signal, a pressure sensor may use at least four sensor elements 111 to 114 which measure pressure and which are placed according to the above-described principle.

According to a further modification of the above-described principle of achieving a clean measurement signal, a temperature sensor may use at least four sensor elements 111 to 114 measuring temperature and which are placed according to the above-described principle.

In general, the sensor device 11 may be further adjusted by further sensor elements 111, 112, 113, 114 to 11N to suppress multiple higher harmonics by making 'combined combinations' of sensors. Even more complex variants are imaginable, but at steeply increasing cost and complexity - the total number N of sensor elements 111, 112, 113, 114 to 11N needed is N = 2n+1, in which n equals the number of higher harmonics S1, S2, ... Sn to suppress.

In a general case, the field of the magnetic elements 61 and 71 would be sampled spatially and the signal processing would have the nature of a Discrete Fourier Transform to produce the base tone S0 as the signal of interest.

The sensor elements 111 to 11N are positioned adjacent to each other in the direction of the movement of the carriers 60, 70 and which is approximately perpendicular to the direction of the air gap G.

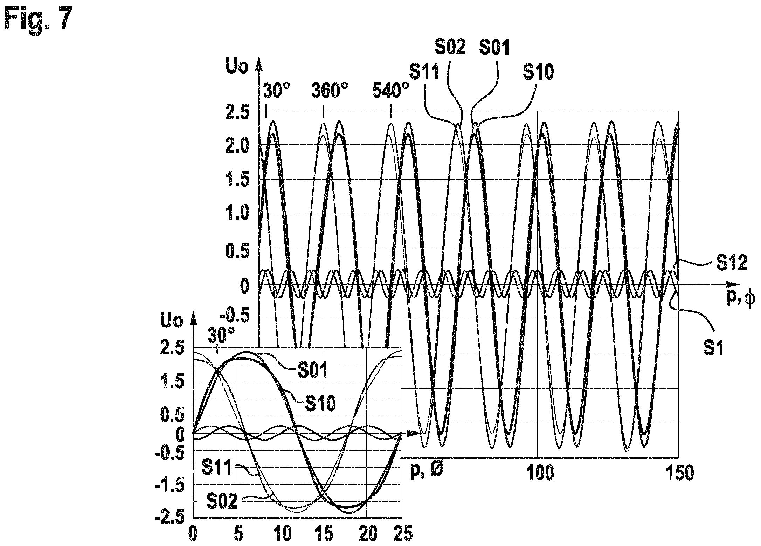

Fig. 7 shows an example of an output of the sensor device 11 in a configuration of a machine 1 shown in Fig. 1 and Fig. 2,

The sensor elements 111 to 114 are positioned adjacent to each other in the direction of the movement of the carriers 60, 70, as described before in respect of Fig. 1 and Fig. 2. In compliance with these conditions, the sensor elements 113, 114 are positioned relative to the sensor elements 111, 112 as described in the following with reference to Fig. 7.

As an example, the first sensor element 111 outputs the sinusoidal detection signal S10 as illustrated in Fig. 7. The detection signal S10 is built up by a base tone S01 and a third harmonic S1. The detection signal S10 as the resulting signal is a harmonic signal with a frequency as described in the previous examples of Fig. 3 and Fig. 4. Also here, the detection signal S10 is a somewhat stomped version of the sine-wave of the base tone S01.

Further in this example, the sensor element 112 outputs a cosine-type detection signal S11 as illustrated in Fig. 7. The detection signal S11 is built up by a cosine-type base tone S02 and a third harmonic S12. The detection signal S11 as the resulting signal is a harmonic signal with a frequency identical to the frequency of the signal S10. Also here, the detection signal S11 is a somewhat stomped version of the cosine-wave of the cosine-type base tone S02.

As derivable from Fig. 7, the detection signals S10, S11 each have a period corresponding to 24mm. The detection signals S10, S11 are augmented with the third harmonic components S1, S12 which each have a period corresponding to 8mm.

The zoomed figure on the left and the bottom of Fig. 7 shows that the third harmonic S1 of the sine wave peaks at an angle $\phi = 30°$ which corresponds to 2 mm offset. The third harmonic S12 of the cosine wave peaks at 0 mm.

The resulting Lissajous figure of the distorted signals of Fig. 7 is the same as shown in Fig. 5. Thus, also here, the Lissajous figure clearly has a square shaped appearance.

So by combining the original sensor signals S10, S11 with signals of the extra sensor elements 113, 114 that are spaced at a certain predefined distance from these original sensor elements 111, 112, the third harmonics S1, S12 can be suppressed.

Also here it is possible that the adjusting element 115 subtracts the analogous signals of the sensor elements 111 to 114. That is, the combining of the signals of the sensor elements 111 to 114 can be done in the analogue domain with the same benefit as mentioned above.

Alternatively the adjusting element 115 combines the signals of the sensor elements 111 to 114 in the digital domain with the same benefit as mentioned in respect of the first embodiment.

Thus, a Lissajous figure of the compensated sensor signals S10, S11 according to Fig. 6 can be achieved. The Lissajous figure has now the desired circular shaped appearance.

During operation of the machine 1 of Fig. 1, the sensor device 11 can observe a multitude of revolutions each indicating one magnetic period, which corresponds to one pole pitch 62 of the magnet plate of the carriers 60, 70, as illustrated in Fig. 7 by the detection signals S10, S11.

The revolutions can be counted to obtain coarse position information with a resolution of the pole pitch 62. Within one pole pitch 62, a fine resolution can be obtained by means of interpolation. The total position of the carrier 60, 70 as determined by the sensor 11 is equal to the coarse position p plus the interpolated fine position fp.

For the fine interpolation, the detection signals S10, S11 are processed as follows.

In an offline pre-processing, a unit circle is fitted to obtain calibration parameters for voltage offsets, voltage gains, and sine-cosine phase error. Thereafter, a calibration is applied to the measured detection signals S10, S11. Further, the angle $\varphi$ is determined by means of the $\tan^{-1}$ function of the calibrated sine and cosine values of the detection signals S10, S11. Further, the position p is determined by mapping the angle $\varphi$ to the pole pitch 62: $p = \varphi/360°*\text{pole-pitch}$.

According to a second embodiment, at least one of the sensor devices 11 12, 21, 22, 31, 32, 41, 42, 51, 52, 12, 21, 22, 31, 32, 41, 42, 51, 52, is an optical sensor. Herein, the sensor elements thereof are placed as described above with reference to the magnetic sensing systems.

All of the above-described implementations of the machine 1, the sensor devices 11, 12 and the above-described method can be used separately or in all possible combinations thereof. The features of the described embodiments and/or their modifications can be combined arbitrarily. Moreover, in particular, the following modifications are conceivable.

The dimensions shown in the drawings are used for illustrating the principle of the invention and are not limiting. The actual dimensions of the detection device 5 and the components thereof can be selected as appropriate to fulfil the above described functionality.

The elements shown in the figures are depicted schematically and can differ in the specific implementations from the forms shown in the figures provided that the above-described functions are ensured.

The number of the driving devices 10, 20, 30, 40, 50 can be selected as desired. The number can be at least two.

The sensor devices 11 12, 21, 22, 31, 32, 41, 42, 51, 52, 12, 21, 22, 31, 32, 41, 42, 51, 52 are optionally configured for detecting dimensions in the range of micrometers, for example. That is, the dimensions can be in the range of meters to nanometers or less, however, preferably, in the range of millimeters to micrometers or less. In the case of the carriers 60, 70 being a carrier for carrying a wafer, it is preferable that the sensor devices 11 12, 21, 22, 31, 32, 41, 42, 51, 52, 12, 21, 22, 31, 32, 41, 42, 51, 52, are configured to detect dimensions in the range of at least micrometers, i.e. micrometers or less, for example 10 to 100 $\mu$m.

**Claims**

**1.** A transport system (3), comprising
at least two controllable driving devices (10, 20, 30, 40, 50),
at least one carrier (60; 70), and
at least one sensor device (11) for detecting the position of said at least one carrier (60; 70) in said transport system (3),
wherein at least one magnetic element (61; 71) of said at least one carrier (60; 70) is positioned to cooperate with said at least two controllable driving devices (10, 20, 30, 40, 50) so that said at least one carrier (60; 70) is moveable relative to said at least two controllable driving devices (10, 20, 30, 40, 50) by magnetic force,
wherein said at least one sensor device (11) is positioned to detect the position of said at least one carrier (60; 70) at one of said at least two controllable driving devices (10, 20, 30, 40, 50),
wherein said at least one sensor device (11) is adapted to produce detection signals (S10; S20; S30; S10, S11) having a base tone (S0; S01, S02) and higher harmonics,
wherein said sensor device (11) comprises at least two sensor elements (111, 112) for measuring the position of said carrier (60; 70), at least two extra sensor elements (113, 114) for measuring the position of said carrier (60; 70), and an adjusting element (115) configured to adjust the detection signals (S10; S20; S30; S10, S11) of said at least two sensor elements (111, 112) by detection signals of the at least two extra sensor elements (113, 114) to cancel at least one of said harmonics of said base tone (S0; S01, S02) of one of said detection signals (S10; S20; S30; S10, S11),
wherein said at least two controllable driving devices (10, 20, 30, 40, 50), said at least two sensor elements (111, 112) and said at least two extra sensor elements (113, 114) are positioned in a plane which is spaced by an air gap (G) from said at least one carrier (60; 70),
wherein said air gap (G) is configured to have a value balancing between signal to noise ratio and signal distortion due to the harmonics of the detection signal (S10; S20; S30; S10, S11) of the sensor device (11), and
wherein said at least two extra sensor elements (113, 114) are positioned relative to the at least two sensor elements (111, 112) to cancel said at least one harmonic of a base tone (S0; S01, S02) of the detection signals (S10; S20; S30; S10, S11) of the at least two sensor elements (111, 112) by the adjustment for which said adjusting element (115) is configured.

2. The transport system (3) according to claim 1, wherein said sensor elements (111, 112) are positioned on a line which is in parallel with the direction of motion and which is spaced by said air gap (G) from said at least one carrier (60; 70).

3. The transport system (3) according to claim 1 or 2,
wherein said at least one carrier (60; 70) comprises a base plate at which a plurality of said magnetic elements (61) are positioned spaced to each other so that a magnet pole pitch (62) is present
wherein said value of said air gap (G) is approximately a quarter of said magnet pole pitch (62).

4. The transport system (3) according to any one of the preceding claims, wherein said at least two sensor elements (111, 112) build a SinCos-sensor for measuring the position of said carrier (60; 70).

5. The transport system (3) according to any one of the preceding claims, wherein two sensor elements (111, 112) are used for measuring the position of said carrier (60; 70), and wherein at least one of said at least two extra sensor elements (113, 114) is positioned between the two sensor elements (111, 112).

6. The transport system (3) according to any one of the preceding claims, wherein said at least two sensor elements (111, 112) are magnetic sensor elements or optical sensor elements or capacitive sensor elements.

7. The transport system (3) according to claim 5, wherein said magnetic sensor elements are Hall elements or magneto-resistive sensor elements.

8. The transport system (3) according to any one of the preceding claims, wherein said adjusting element (115) is configured to adjust the detection signals (S10; S20; S30; S10, S11) in the analogue domain or in the digital domain.

9. The transport system (3) according to any one of the preceding claims, wherein said adjusting element (115) is configured to adjust the detection signals (S10; S20; S30; S10, S11) by subtracting or otherwise processing the detection signals (S10; S20; S30; S10, S11) of said at least two sensor elements (111, 112) and the at least two extra sensor elements (113, 114).

10. The transport system (3) according to any one of the preceding claims, wherein said two controllable driving devices (10, 20, 30, 40, 50) build a track which comprises at least one linear section and/or at least one curved section.

11. A machine (1; 3) for treating and/or producing an article (2), comprising a transport system (3) according to any one of the preceding claims, wherein said article (2) is a semiconductor wafer (2) or a display panel.

12. A method for detecting a position of a carrier (60; 70) in a transport system (3) that comprises at least two controllable driving devices (10, 20, 30, 40, 50), at least one carrier (60; 70), and at least one sensor device (11), wherein at least one magnetic element (61; 71) of said at least one carrier (60; 70) cooperates with said at least two controllable driving devices (10, 20, 30, 40, 50) so that said at least one carrier (60; 70) is moveable relative to said at least two controllable driving devices (10, 20, 30, 40, 50) by magnetic force, and wherein said at least one sensor device (11) is positioned to detect the position of said at least one carrier (60; 70) at one of said at least two controllable driving devices (10, 20, 30, 40, 50), said method comprising the steps of

detecting, by said sensor device (11), the position of a carrier (60; 70) in said transport system (3), wherein said sensor device (11) comprises at least two sensor elements (111, 112) for measuring the position of said carrier (60; 70) and comprises at least two extra sensor elements (113, 114) for measuring the position of said carrier (60; 70) and comprises an adjusting element (115), and

adjusting, by said adjusting element (115), the detection signals (S10; S20; S30; S10, S11) of said at least two sensor elements (111, 112) by detection signals of the at least two extra sensor elements (113, 114) to cancel at least one harmonic of a base tone (S0; S01, S02) of one detection signal (S10; S20; S30; S10, S11),

wherein said at least two sensor elements (111, 112) and said at least two extra sensor elements (113, 114) are positioned in a plane which is spaced by an air gap (G) from said at least one carrier (60; 70),

wherein said air gap (G) is configured to have a value balancing between signal to noise ratio (SNR) and signal distortion due to harmonics of the detection signal (S10; S20; S30; S10, S11) of the sensor device (11), and

wherein said at least two extra sensor elements (113, 114) are positioned relative to the at least two sensor elements (111, 112) to cancel the at least one harmonic of a base tone (S0; S01, S02) of the detection signals (S10; S20; S30; S10, S11) of the at least two sensor elements (111, 112) by the adjustment performed by said adjusting element (115).

**Patentansprüche**

1. Transportsystem (3), umfassend:

   mindestens zwei steuerbare Antriebsvorrichtungen (10, 20, 30, 40, 50),
   mindestens einen Träger (60; 70) und
   mindestens eine Sensorvorrichtung (11) zum Erfassen der Position des mindestens einen Trägers (60; 70) in dem Transportsystem (3),
   wobei mindestens ein magnetisches Element (61; 71) des mindestens einen Trägers (60; 70) so positioniert ist, dass es mit den mindestens zwei steuerbaren Antriebsvorrichtungen (10, 20, 30, 40, 50) zusammenarbeitet, so dass der mindestens eine Träger (60; 70) in Bezug auf die mindestens zwei steuerbaren Antriebsvorrichtungen (10, 20, 30, 40, 50) durch Magnetkraft beweglich ist,
   wobei die mindestens eine Sensorvorrichtung (11) positioniert ist, um die Position des mindestens einen Trägers (60; 70) an einer der mindestens zwei steuerbaren Antriebsvorrichtungen (10, 20, 30, 40, 50) zu erfassen, wobei die mindestens eine Sensorvorrichtung (11) angepasst ist, Erfassungssignale (S10; S20; S30; S10, S11) mit einem Grundton (S0; S01, S02) und höheren Harmonischen zu erzeugen,
   wobei die Sensorvorrichtung (11) Folgendes umfasst: mindestens zwei Sensorelemente (111, 112) zum Messen der Position des Trägers (60; 70), mindestens zwei zusätzliche Sensorelemente (113, 114) zum Messen der Position des Trägers (60; 70) und ein Einstellelement (115), das konfiguriert ist, die Erfassungssignale (S10; S20; S30; S10, S11) der mindestens zwei Sensorelemente (111, 112) durch Erfassungssignale der mindestens zwei zusätzlichen Sensorelemente (113, 114) einzustellen, um mindestens eine der Harmonischen des Grundtons (S0; S01, S02) eines der Erfassungssignale (S10; S20; S30; S10, S11) aufzuheben,
   wobei die mindestens zwei steuerbaren Antriebsvorrichtungen (10, 20, 30, 40, 50), die mindestens zwei Sensorelemente (111, 112) und die mindestens zwei zusätzlichen Sensorelemente (113, 114) in einer Ebene positioniert sind, die durch einen Luftspalt (G) von dem mindestens einen Träger (60; 70) beabstandet ist,
   wobei der Luftspalt (G) so konfiguriert ist, dass er einen Wert aufweist, der zwischen dem Signal-RauschVerhältnis und der Signalverzerrung aufgrund der Harmonischen des Erfassungssignals (S10; S20; S30; S10, S11) der Sensorvorrichtung (11) ausgleicht, und
   wobei die mindestens zwei zusätzlichen Sensorelemente (113, 114) relativ zu den mindestens zwei Sensorelementen (111, 112) positioniert sind, um die mindestens eine Harmonische eines Grundtons (S0; S01, S02) der Erfassungssignale (S10; S20; S30; S10, S11) der mindestens zwei Sensorelemente (111, 112) durch die Einstellung, für die das Einstellelement (115) konfiguriert ist, aufzuheben.

2. Transportsystem (3) nach Anspruch 1, wobei die Sensorelemente (111, 112) auf einer Linie angeordnet sind, die mit der Bewegungsrichtung parallel ist und die von dem mindestens ein Träger (60; 70) durch den Luftspalt (G) beabstandet ist.

3. Transportsystem (3) nach Anspruch 1 oder 2,
   wobei der mindestens eine Träger (60; 70) eine Grundplatte umfasst, an der mehrere der Magnetelemente (61) beabstandet zueinander angeordnet sind, so dass ein Magnetpolabstand (62) vorliegt, wobei der Wert des Luftspalts (G) ungefähr ein Viertel des Magnetpolabstands (62) beträgt.

4. Transportsystem (3) nach einem der vorhergehenden Ansprüche, wobei die mindestens zwei Sensorelemente (111, 112) einen Sinus-Cosinus-Sensor zum Messen der Position des Trägers (60; 70) ausbilden.

5. Transportsystem (3) nach einem der vorhergehenden Ansprüche, wobei zwei Sensorelemente (111, 112) zum Messen der Position des Trägers (60; 70) verwendet werden und wobei zumindest eines der mindestens zwei zusätzlichen Sensorelemente (113, 114) zwischen den zwei Sensorelementen (111, 112) positioniert ist.

6. Transportsystem (3) nach einem der vorhergehenden Ansprüche, wobei die mindestens zwei Sensorelemente (111, 112) magnetische Sensorelemente oder optische Sensorelemente oder kapazitive Sensorelemente sind.

7. Transportsystem (3) nach Anspruch 5, wobei die magnetischen Sensorelemente Hall-Elemente oder magnetoresistive Sensorelemente sind.

8. Transportsystem (3) nach einem der vorhergehenden Ansprüche, wobei das Einstellelement (115) konfiguriert ist, die Erfassungssignale (S10; S20; S30; S10, S11) im analogen Bereich oder im digitalen Bereich einzustellen.

9. Transportsystem (3) nach einem der vorhergehenden Ansprüche, wobei das Einstellelement (115) konfiguriert ist, die Erfassungssignale (S10; S20; S30; S10, S11) durch Subtrahieren oder sonstiger Verarbeitung der Erfassungssignale (S10; S20; S30; S10, S11) der mindestens zwei Sensorelemente (111, 112) und der mindestens zwei zusätzlichen Sensorelemente (113, 114) einzustellen.

10. Transportsystem (3) nach einem der vorhergehenden Ansprüche, wobei die zwei steuerbaren Antriebsvorrichtungen (10, 20, 30, 40, 50) eine Spur ausbilden, die mindestens einen linearen Abschnitt und/oder mindestens einen gekrümmten Abschnitt umfasst.

11. Maschine (1; 3) zum Behandeln und/oder Erzeugen eines Gegenstandes (2), umfassend ein Transportsystem (3) nach einem der vorhergehenden Ansprüche, wobei der Gegenstand (2) ein Halbleiterwafer (2) oder ein Anzeigepanel ist.

12. Verfahren zum Erfassen einer Position eines Trägers (60; 70) in einem Transportsystem (3), welches mindestens zwei steuerbare Antriebseinrichtungen (10, 20, 30, 40, 50), mindestens einen Träger (60; 70) und mindestens eine Sensorvorrichtung (11) umfasst, wobei mindestens ein magnetisches Element (61; 71) des mindestens einen Trägers (60; 70) mit den mindestens zwei steuerbaren Antriebsvorrichtungen (10, 20, 30, 40, 50) zusammenarbeitet, so dass der mindestens eine Träger (60; 70) in Bezug auf die mindestens zwei steuerbaren Antriebsvorrichtungen (10, 20, 30, 40, 50) durch Magnetkraft beweglich ist, und wobei die mindestens eine Sensorvorrichtung (11) positioniert ist, um die Position des mindestens einen Trägers (60; 70) an einer der mindestens zwei steuerbaren Antriebsvorrichtungen (10, 20, 30, 40, 50) zu erfassen, wobei das Verfahren die folgenden Schritte umfasst:

Erfassen, durch die Sensorvorrichtung (11), der Position eines Trägers (60; 70) in dem Transportsystem (3), wobei die Sensorvorrichtung (11) mindestens zwei Sensorelemente (111, 112) zum Messen der Position des Trägers (60; 70) umfasst und mindestens zwei zusätzliche Sensorelemente (113, 114) zum Messen der Position des Trägers (60; 70) umfasst und ein Einstellelement (115) umfasst, und
Einstellen, durch das Einstellelement (115), der Erfassungssignale (S10; S20; S30; S10, S11) der mindestens zwei Sensorelemente (111, 112) durch Erfassungssignale der mindestens zwei zusätzlichen Sensorelemente (113, 114), um mindestens eine Harmonische eines Grundtons (S0; S01, S02) eines Erfassungssignals (S10; S20; S30; S10, S11) aufzuheben, wobei die mindestens zwei Sensorelemente (111, 112) und die mindestens zwei zusätzlichen Sensorelemente (113, 114) in einer Ebene positioniert sind, die durch einen Luftspalt (G) von dem mindestens einen Träger (60; 70) beabstandet ist,
wobei der Luftspalt (G) so konfiguriert ist, dass er einen Wert aufweist, der zwischen dem Signal-RauschVerhältnis (SNR) und der Signalverzerrung aufgrund von Harmonischen des Erfassungssignals (S10; S20; S30; S10, S11) der Sensorvorrichtung (11) ausgleicht, und
wobei die mindestens zwei zusätzlichen Sensorelemente (113, 114) relativ zu den mindestens zwei Sensorelementen (111, 112) positioniert sind, um die mindestens eine Harmonische eines Grundtons (S0; S01, S02) der Erfassungssignale (S10; S20; S30; S10, S11) der mindestens zwei Sensorelemente (111, 112) durch die Einstellung, die durch das Einstellelement (115) ausgeführt wird, aufzuheben.

**Revendications**

1. Système de transport (3), comprenant
au moins deux dispositifs d'entraînement contrôlables (10, 20, 30, 40, 50),
au moins un transporteur (60 ; 70), et
au moins un dispositif de capteur (11) pour détecter la position dudit au moins un transporteur (60 ; 70) dans ledit système de transport (3),
dans lequel au moins un élément magnétique (61 ; 71) dudit au moins un transporteur (60 ; 70) est positionné pour interagir avec lesdits au moins deux dispositifs d'entraînement contrôlables (10, 20, 30, 40, 50) de sorte que ledit au moins un transporteur (60 ; 70) puisse être déplacé par force magnétique par rapport auxdits au moins deux dispositifs d'entraînement contrôlables (10, 20, 30, 40, 50),
dans lequel ledit au moins un dispositif de capteur (11) est positionné pour détecter la position dudit au moins un transporteur (60 ; 70) au niveau de l'un desdits au moins deux dispositifs d'entraînement contrôlables (10, 20, 30, 40, 50),
dans lequel ledit au moins un dispositif de capteur (11) est adapté pour produire des signaux de détection (S10 ; S20 ; S30 ; S10, S11) ayant une tonalité de base (S0 ; S01, S02) et des harmoniques plus aiguës,
dans lequel ledit dispositif de capteur (11) comprend au moins deux éléments de capteurs (111, 112) pour mesurer la position dudit transporteur (60 ; 70), au moins deux éléments de capteurs supplémentaires (113, 114) pour mesurer la position dudit transporteur (60 ; 70), et un élément d'ajustement (115) configuré pour ajuster les signaux de détection (S10 ; S20 ; S30 ; S10, S11) desdits au moins deux éléments de capteurs (111, 112) par des signaux de détection des au moins deux éléments de capteurs supplémentaires (113, 114) pour annuler au moins l'une desdites harmoniques de ladite tonalité de base (S0 ; S01, S02) de l'un desdits signaux de détection (S10 ; S20 ; S30 ; S10, S11),
dans lequel lesdits au moins deux dispositifs d'entraînement contrôlables (10, 20, 30, 40, 50), lesdits au moins deux éléments de capteurs (111, 112) et lesdits au moins deux éléments de capteurs supplémentaires (113, 114) sont positionnés dans un plan qui est espacé par un entrefer (G) dudit au moins un transporteur (60 ; 70),
dans lequel ledit entrefer (G) est configuré pour avoir une valeur oscillant entre un rapport signal sur bruit et une distorsion de signal due aux harmoniques du signal de détection (S10 ; S20 ; S30 ; S10, S11) du dispositif de capteur (11), et
dans lequel lesdits au moins deux éléments de capteurs supplémentaires (113, 114) sont positionnés par rapport aux au moins deux éléments de capteurs (111, 112) pour annuler ladite au moins une harmonique d'une tonalité de base (S0 ; S01, S02) des signaux de détection (S10 ; S20 ; S30 ; S10, S11) des au moins deux éléments de capteurs (111, 112) par l'ajustement pour lequel ledit élément d'ajustement (115) est configuré.

2. Système de transport (3) selon la revendication 1, dans lequel lesdits éléments de capteurs (111, 112) sont positionnés sur une ligne qui est parallèle à la direction de mouvement et qui est espacée par ledit entrefer (G) dudit au moins un transporteur (60 ; 70).

3. Système de transport (3) selon la revendication 1 ou 2,
dans lequel ledit au moins un transporteur (60 ; 70) comprend une plaque de base au niveau de laquelle une pluralité desdits éléments magnétiques (61) sont positionnés espacés les uns des autres de sorte qu'un pas de pôle magnétique (62) soit présent,
dans lequel ladite valeur dudit entrefer (G) est approximativement un quart dudit pas de pôle magnétique (62).

4. Système de transport (3) selon l'une quelconque des revendications précédentes, dans lequel lesdits au moins deux éléments de capteurs (111, 112) forment un capteur SinCos pour mesurer la position dudit transporteur (60 ; 70) .

5. Système de transport (3) selon l'une quelconque des revendications précédentes, dans lequel deux éléments de capteurs (111, 112) sont utilisés pour mesurer la position dudit transporteur (60 ; 70), et dans lequel au moins l'un desdits au moins deux éléments de capteurs supplémentaires (113, 114) est positionné entre les deux éléments de capteurs (111, 112).

6. Système de transport (3) selon l'une quelconque des revendications précédentes, dans lequel lesdits au moins deux éléments de capteurs (111, 112) sont des éléments de capteurs magnétiques ou des éléments de capteurs optiques ou des éléments de capteurs capacitifs.

7. Système de transport (3) selon la revendication 5, dans lequel lesdits éléments de capteurs magnétiques sont des éléments Hall ou des éléments de capteurs magnétorésistifs.

8. Système de transport (3) selon l'une quelconque des revendications précédentes, dans lequel ledit élément d'ajustement (115) est configuré pour ajuster les signaux de détection (S10 ; S20 ; S30 ; S10, S11) dans le domaine analogique ou dans le domaine numérique.

9. Système de transport (3) selon l'une quelconque des revendications précédentes, dans lequel ledit élément d'ajustement (115) est configuré pour ajuster les signaux de détection (S10 ; S20 ; S30 ; S10, S11) en soustrayant ou en traitant autrement les signaux de détection (S10 ; S20 ; S30 ; S10, S11) desdits au moins deux éléments de capteurs (111, 112) et des au moins deux éléments de capteurs supplémentaires (113, 114).

10. Système de transport (3) selon l'une quelconque des revendications précédentes, dans lequel lesdits deux dispositifs d'entraînement contrôlables (10, 20, 30, 40, 50) forment une piste qui comprend au moins une section linéaire et/ou au moins une section courbée.

11. Machine (1 ; 3) pour traiter et/ou produire un article (2), comprenant un système de transport (3) selon l'une quelconque des revendications précédentes, dans laquelle ledit article (2) est une galette semiconductrice (2) ou un panneau d'affichage.

12. Procédé pour détecter une position d'un transporteur (60 ; 70) dans un système de transport (3) qui comprend au moins deux dispositifs d'entraînement contrôlables (10, 20, 30, 40, 50), au moins un transporteur (60 ; 70), et au moins un dispositif de capteur (11), dans lequel au moins un élément magnétique (61 ; 71) dudit au moins un transporteur (60 ; 70) interagit avec lesdits au moins deux dispositifs d'entraînement contrôlables (10, 20, 30, 40, 50) de sorte que ledit au moins un transporteur (60 ; 70) puisse être déplacé par force magnétique par rapport auxdits au moins deux dispositifs d'entraînement contrôlables (10, 20, 30, 40, 50), et dans lequel ledit au moins un dispositif de capteur (11) est positionné pour détecter la position dudit au moins un transporteur (60 ; 70) au niveau de l'un desdits au moins deux dispositifs d'entraînement contrôlables (10, 20, 30, 40, 50), ledit procédé comprenant les étapes de

détection, par ledit dispositif de capteur (11), de la position d'un transporteur (60 ; 70) dans ledit système de transport (3), ledit dispositif de capteur (11) comprenant au moins deux éléments de capteurs (111, 112) pour mesurer la position dudit transporteur (60 ; 70) et comprenant au moins deux éléments de capteurs supplémentaires (113, 114) pour mesurer la position dudit transporteur (60 ; 70) et comprenant un élément d'ajustement (115), et

ajustement, par ledit élément d'ajustement (115), des signaux de détection (S10 ; S20 ; S30 ; S10, S11) desdits au moins deux éléments de capteurs (111, 112) par des signaux de détection des au moins deux éléments de capteurs supplémentaires (113, 114) pour annuler au moins une harmonique d'une tonalité de base (S0 ; S01, S02) d'un signal de détection (S10 ; S20 ; S30 ; S10, S11),

dans lequel lesdits au moins deux éléments de capteurs (111, 112) et lesdits au moins deux éléments de capteurs supplémentaires (113, 114) sont positionnés dans un plan qui est espacé par un entrefer (G) dudit au moins un transporteur (60 ; 70),

dans lequel ledit entrefer (G) est configuré pour avoir une valeur oscillant entre un rapport signal sur bruit (SNR) et une distorsion de signal due à des harmoniques du signal de détection (S10 ; S20 ; S30 ; S10, S11) du dispositif de capteur (11), et

dans lequel lesdits au moins deux éléments de capteurs supplémentaires (113, 114) sont positionnés par rapport aux au moins deux éléments de capteurs (111, 112) pour annuler l'au moins une harmonique d'une tonalité de base (S0 ; S01, S02) des signaux de détection (S10 ; S20 ; S30 ; S10, S11) des au moins deux éléments de capteurs (111, 112) par l'ajustement effectué par ledit élément d'ajustement (115).

Fig. 1

## Fig. 2

## Fig. 3

## Fig. 4

# Fig. 5

# Fig. 6

Fig. 7

**EP 3 588 014 B1**

**REFERENCES CITED IN THE DESCRIPTION**

**Patent documents cited in the description**

- EP 2182627 A1
- US 20140285184 A1
- EP 2314989 A1
- US 20020105445 A1